# DEMANDE DE BREVET EUROPEEN

(11) **EP 1 802 026 A2**
(43) Date de publication de la demande: **27.06.2007**
(21) Numéro de dépôt: 06126626.8
(22) Date de dépôt: 20.12.2006
(51) Int. Cl.: H04L 9/32

(54) **Procédé de déblocage d'une ressource par un dispositif sans contact**

(30) Priorité: 23.12.2005 FR 0554081
(71) Demandeur: Société Française du Radiotéléphone-SFR, 75008 Paris (FR)
(72) Inventeur: Eznack, Maryline, 78260, ACHERES (FR); Wary, Jean-Philippe, 92340, BOURG LA REINE (FR)
(74) Mandataire: Schmit, Christian Norbert Marie

(57) **Abrégé**

Pour permettre le déblocage d'une ressource en évitant les possibilités de rejeu interpersonnel ou par vol de droits, on prévoit un dispositif sans contact de type RFID apte à répondre à un challenge et à transmettre de manière sécurisée un authentifiant du porteur du dispositif. La réponse au challenge permet d'assurer une variation des signaux émis ce qui garantit l'impossibilité du vol de droits. L'authentifiant permet, via une saisie, de garantir que la personne utilisant le dispositif sans contact est bien celle à laquelle il appartient.

## Description

L'invention a pour objet un procédé de déblocage d'une ressource par un dispositif sans contact. Le domaine de l'invention est celui du contrôle d'accès à une ressource. Le terme "ressource" est ici employé de manière générique. Il peut s'agir d'une ressource de communication comme un téléphone mobile, d'un portique d'accès à une infrastructure publique ou privée, d'un véhicule ou d'un moyen de paiement. Le fait de débloquer une ressource doit donc aussi s'entendre au sens large. En reprenant les exemples cités ci-dessus, débloquer signifie, respectivement, autoriser une communication, ouvrir un portique, démarrer un véhicule, autoriser l'accès à un bien ou un service, autoriser un paiement, cette liste n'étant pas exhaustive.

Dans la suite du document, nous assimilons les termes, ressource, accès à la ressource, comme l'ensemble du dispositif comprenant l'émetteur radio fréquence générant le courant induit dans le dispositif RFID (Radio Frequency Identification, pour identification radiofréquence), le récepteur radio fréquence recevant le signal émis par le RFID sous l'effet du courant induit et l'application en charge de la gestion, du contrôle des différents échanges au niveau du système émetteur/récepteur et du déblocage de l'accès à la ressource elle-même.

L'invention a pour but de permettre un déblocage de ressource limitant les possibilités de rejeu, et/ou de permettre un déblocage de ressource avec identification du porteur du dispositif sans contact. Dans la pratique le dispositif sans contact est une puce RFID. L'invention n'est pas limitée à l'utilisation de la technologie RFID, elle peut aussi s'appuyer sur tous les autres protocoles de communication sans fil comme les échanges Bluetooth© ou Infrarouge (liste non limitative).

Dans l'état de la technique on connaît les puces RFID et certaines de leurs applications notamment dans le domaine du déblocage de ressource. Les applications les plus connues sont les caisses électroniques et l'ouverture de portique. Dans le cas de l'ouverture de portique l'homme du métier est sur le point de renoncer suite à l'apparition de différents problèmes de fraude liés à l'utilisation même des puces RFID.

Parmi les caractéristiques principales de ces puces on trouve en effet:
- peu ou pas de moyen de traitement,
- pas de batterie autonome.

Du fait de ces caractéristiques, dans l'état de la technique les puces RFID se bornent donc à émettre un signal lorsqu'elles sont sollicitées par un champ électrique qui les alimente, ce signal est traité par le lecteur associé à l'application pour autoriser ou non le déblocage de la ressource requise.

Dans le cadre d'une application de déblocage d'une ressource cela pose au moins un vrai problème qui est celui du rejeu. Une personne malintentionnée et possédant un enregistreur radiofréquence peut en effet enregistrer le signal émis par une puce et dès lors le rejouer à volonté. Le propriétaire de la ressource perd alors le contrôle de cette ressource.

Un autre problème lié à ce mode de déblocage est l'impossibilité d'identifier le porteur du dispositif de déblocage. De ce fait le seul moyen d'éviter un rejeu temporel, à savoir l'utilisation successive du même dispositif de déblocage par deux personnes distinctes, est de temporiser le déblocage de la ressource. Cela peut être pénalisant si c'est la même et bonne personne qui souhaite débloquer successivement la ressource.

Dans l'invention on résout ces problèmes en faisant calculer un challenge par la puce RFID. Ce challenge est basé sur une information émise par l'application en charge du contrôle d'accès à la ressource à débloquer. Le mode de calcul est simple et basé sur des algorithmes tels que MD5, SHA1, ou des algorithmes de chiffrement symétriques demandant peu de puissance de calcul. Dans ce mode de réalisation le message émis par le dispositif de déblocage pour débloquer une ressource donnée n'est jamais le même et dépend d'une information émise par la ressource elle-même. Cette information est la source de la variabilité des échanges, variabilité permettant l'unicité des échanges. Cette information peut, en outre, être basée sur une information temporelle, un numéro de série ou une donnée pseudoaléatoire, la liste étant ici également non exhaustive. Il devient donc tout aussi inutile d'enregistrer le signal émis par le dispositif de déblocage que d'essayer de le rejouer.

Dans une variante de l'invention le dispositif de déblocage gère aussi un authentifiant du porteur dudit dispositif, cet authentifiant étant mis à disposition du porteur via un mécanisme dans une phase préalable d'enregistrement. La ressource est alors en mesure d'authentifier le porteur si elle le désire. Il suffit à la ressource de demander au porteur de saisir l'authentifiant mis préalablement à disposition par le système de déblocage, sur un équipement dédié. La ressource peut alors faire la comparaison entre l'authentifiant enregistré et l'authentifiant saisi.

Autrement dit, dans une autre variante de l'invention l'authentifiant mis à disposition du porteur est enregistré au sein de la puce RFID. La ressource est alors en mesure d'authentifier le porteur si elle le désire. Il suffit à la ressource de demander au porteur de saisir l'authentifiant mis préalablement à disposition par le système de déblocage et enregistré dans la puce RFID, sur un équipement dédié. La ressource peut alors faire la comparaison entre l'authentifiant enregistré dans la puce RFID et émis vers la ressource et l'authentifiant saisi.

Dans une autre variante, la ressource pourrait concerner une information détenue par le RFID (par exemple une identité, un compte bancaire), cette information serait diffusée suivant les méthodes décrites précédemment, mais il est possible d'interroger ou d'analyser la réponse de la puce RFID sans la possession de l'authentifiant de l'utilisateur, cette fonctionnalité pouvant être mise à disposition, par exemple, des forces de police dans le cadre de la mise en oeuvre de la présente invention dans la protection des cartes d'identité. Dans cette sous variante l'entité utilisant le moyen de déblocage n'est alors pas forcément le porteur du dispositif mais une entité ayant les autorisations, concrétisé par un authentifiant particulier, d'utiliser le moyen de déblocage.

L'invention a donc pour objet un procédé de déblocage d'une ressource par un dispositif sans contact, la ressource et le dispositif communiquant par une voie aérienne, caractérisé en ce qu'il comporte les étapes suivantes:
- établissement d'une communication entre la ressource et le dispositif,
- émission d'un message de challenge par la ressource via la communication établie vers le dispositif sans contact,
- production par le dispositif sans contact d'un message de réponse au message de challenge,
- émission du message de réponse du dispositif sans contact vers la ressource,
- analyse par la ressource du message de réponse et libération de la ressource en cas d'analyse positive.

Avantageusement l'invention est aussi caractérisée en ce que le message de réponse comporte un authentifiant d'un porteur du dispositif sans contact, le procédé comportant alors les étapes supplémentaires suivantes :
- demande, par la ressource, de saisie d'un authentifiant par le porteur du dispositif sans contact,
- confrontation, par la ressource, de l'authentifiant saisi à l'authentifiant que comporte le message de réponse,
- libération de la ressource en cas de confrontation positive.

Avantageusement l'invention est aussi caractérisée en ce que le message de réponse comporte au moins un champ pour décrire des droits associés à l'utilisation de la ressource.

Avantageusement l'invention est aussi caractérisée en ce qu'au moins une partie du message de réponse est chiffrée.

Avantageusement l'invention est aussi caractérisée en ce que le chiffrement se fait par application d'un algorithme de chiffrement symétrique dont la clé de chiffrement est enregistrée dans le dispositif sans contact et ladite clé est une fonction d'un identifiant de clé lui aussi enregistré dans le dispositif sans contact ledit identifiant de clé étant alors transmis en clair dans le message de réponse.

Avantageusement l'invention est aussi caractérisée en ce que la fonction produisant la clé de chiffrement est mise en oeuvre par le dispositif sans contact.

Avantageusement l'invention est aussi caractérisée en ce que la fonction produisant la clé de chiffrement est mise en oeuvre dans une phase d'enregistrement dont le résultat seul est stocké par le dispositif sans contact.

Avantageusement l'invention est aussi caractérisée en ce que la clé de chiffrement est fonction d'une clé mère.

Avantageusement l'invention est aussi caractérisée en ce que le dispositif sans contact est une puce radiofréquence de type RFID.

Avantageusement l'invention est aussi caractérisée en ce que le message de challenge comporte un aléa.

Avantageusement l'invention est aussi caractérisée en ce que le message de challenge comporte la description d'une transaction.

L'invention sera mieux comprise à la lecture de la description qui suit et à l'examen des figures qui l'accompagnent. Celles-ci sont présentées à titre indicatif et nullement limitatif de l'invention. Les figures montrent :
Figure 1 : une illustration de moyens utiles à la mise en oeuvre du procédé selon l'invention.
Figure 2 : une illustration d'étape du procédé selon l'invention.

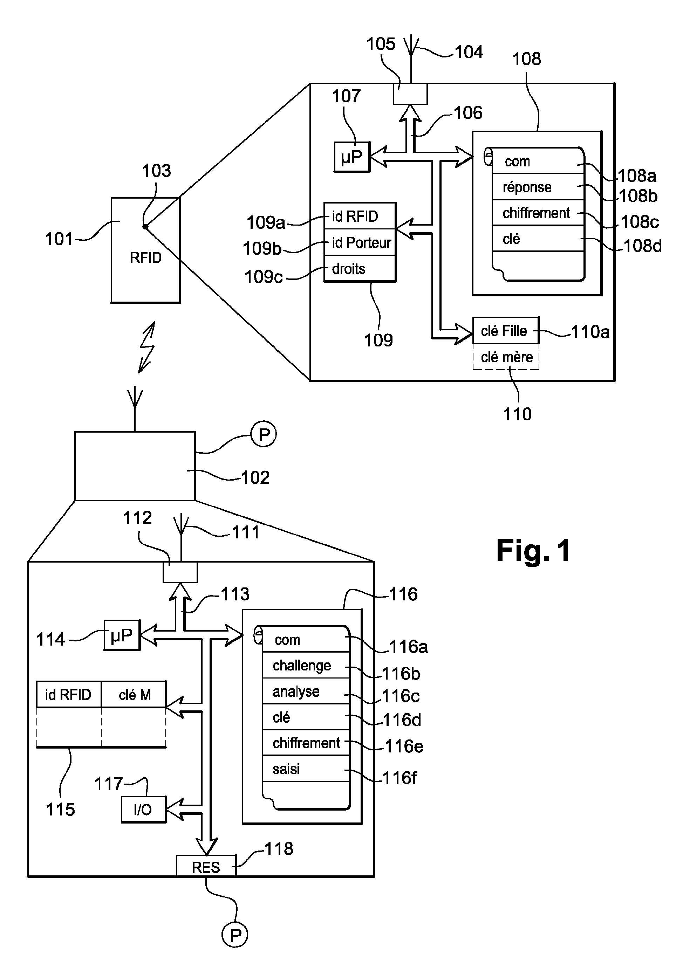

La figure 1 montre un dispositif 101 sans contact passant à portée de détection d'une ressource 102.

Dans cet exemple on considère que le dispositif 101 est une carte comportant une puce de type RFID. Une telle carte est, par exemple, au format carte bancaire. Dans cet exemple la ressource est, par exemple, un portillon P connecté à une unité 102 de détection et commande. La détection porte sur la communication avec le dispositif sans contact. La commande porte sur les communications avec le portillon P.

Dans ce document, lorsque l'on prête une action à un dispositif celle-ci est en fait réalisée par un microprocesseur dudit dispositif commandé par des codes instructions enregistrés dans une mémoire de programme dudit dispositif.

La figure 1 montre que la carte 101 comporte une puce 103 RFID. La puce 103 elle-même comporte une antenne 104 connecté à des circuits 105 d'interface entre l'antenne 104 et un bus 106 de la puce 103. Le rôle des circuits 105 est double. Ces derniers permettent d'une part, d'assurer le transcodage des signaux électriques entre le bus 106 et les signaux reçus/émis par l'antenne 104. Ils permettent d'autre part, d'alimenter la puce 103 à partir de l'énergie radioélectrique captée par l'antenne 104.

La puce 103 comporte aussi, connectés au bus 106, un microprocesseur 107, une mémoire 108 de programme, une mémoire 109 d'identifiants et une mémoire 110 de clés.

Dans ce document, pour un dispositif donné, les mémoires sont représentées de manière séparée mais dans la pratique il peut ne s'agir que d'une seule mémoire divisée en plusieurs zones.

Dans la variante la plus complexe de l'invention, la mémoire 109 comporte au moins les zones suivantes :
- une zone 109a pour enregistré un identifiant de la puce 103,
- une zone 109b pour enregistrer un identifiant du porteur de la carte 101 et,
- une zone 109c pour enregistrer des droits associés à au moins une ressource que la carte 101 est apte à débloquer.

Dans la variante la plus complexe de l'invention, la mémoire 108 comporte au moins les zones suivantes :
- une zone 108a comportant des codes instructions pour la mise en oeuvre de communications avec une ressource,
- une zone 108b comportant des codes instructions 109b pour la production d'un message de réponse à un message de sollicitation d'une ressource,
- une zone 108c comportant des codes instructions pour la mise en oeuvre d'au moins un algorithme de chiffrement et ou de résumé électronique ou « hashage » et,
- une zone 108d comportant des codes instructions pour la production d'une clé de chiffrement.

La figure 1 montre que l'unité 102 de détection comporte une antenne 111 la rendant apte à détecter les dispositifs sans contact de type RFID. L'antenne 111 est connectée à des circuits 112 assurant l'interface entre les signaux reçus/émis par l'antenne 111 et des signaux véhiculeés par un bus 113 de l'unité 102. L'antenne 111 sert aussi à émettre les signaux de puissance permettant l'alimentation des dispositifs sans contact passant à sa portée de détection.

L'unité 102 est elle alimentée par une source d'énergie non représentée, cette source d'énergie étant une batterie ou une connexion à un réseau de distribution d'énergie.

L'unité 102 comporte, connectés au bus 113, un microprocesseur 114, une mémoire 115 de clés, une mémoire 116 de programme, des circuits 117 d'entrée/sortie et des circuits 118 de connexion à la ressource proprement dite, c'est-à-dire au portillon P dans notre exemple. La présence des mémoire 115 et/ou des circuits 117 est dépendante de la variante de réalisation que l'on envisage.

Dans un mode de réalisation complexe, la mémoire 115 permet d'associer un identifiant RFID à une clé dite mère. Dans l'invention cela permet de produire une clé fille à utiliser pour déchiffrer les messages chiffrer émis par une puce RFID s'identifiant par un identifiant RFID.

Dans le mode de réalisation complexe, les circuits 117 sont, par exemple, un clavier numérique ou un lecteur d'une donnée biométrique comme par exemple une empreinte digitale.

Dans le mode de réalisation le plus complexe la mémoire 116 comporte au moins les zones suivantes :
- une zone 116a comportant des codes instructions pour la mise en oeuvre d'une communication avec le dispositif 101,
- une zone 116b comportant des codes instructions pour la production et l'émission d'un message de challenge,
- une zone 116c comportant des codes instructions pour l'analyse d'un message de réponse à un message de challenge,
- une zone 116d comportant des codes instructions pour la production d'une clé de chiffrement/déchiffrement,
- une zone 116e comportant des codes instructions pour la mise en oeuvre d'un algorithme de chiffrement et/ou de hashage et
- une zone 116f comportant des codes instructions pour le pilotage des circuits 117.

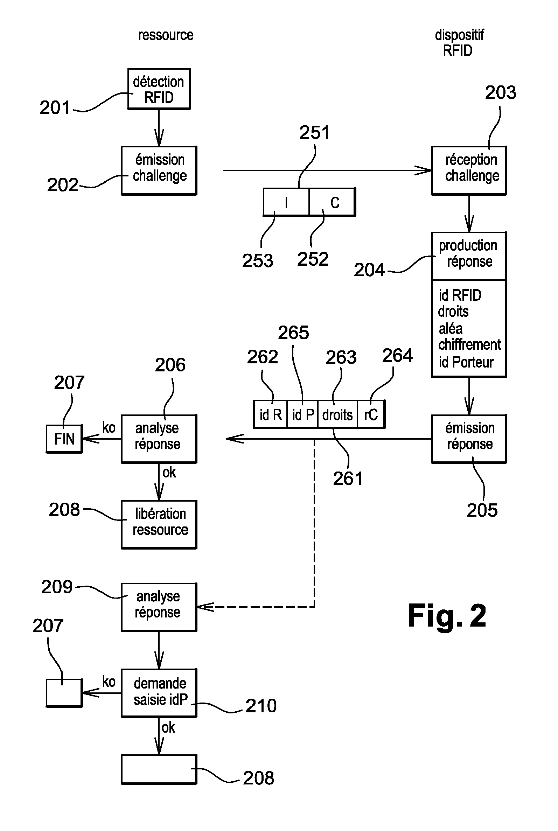

La figure 2 montre une étape 201 préliminaire de détection du dispositif 101 sans contact par l'unité 102. Dans l'étape 201 la détection est, par exemple, le fait pour la ressource d'émettre en permanence un signal de puissance permettant aux dispositifs de type RFID recevant ce signal d'être alimentés et donc de signaler leur présence à la ressource par l'émission d'un signal en retour. Par la suite le dispositif sans contact est désigné comme la carte 101.

Une fois qu'un dispositif sans contact est détecté, l'unité 102 passe à une étape 202 de production et d'émission d'un message de challenge. Un message de challenge est un message 251 comportant au moins un champ 252 de challenge. Dans une mise en oeuvre préférée le message de challenge comporte aussi un champ 253 d'instruction pour identifier le message 251 comme étant un message de challenge comportant le champ 252. Le contenu du champ 252 est, par exemple, une date exprimée en secondes ou millisecondes, la valeur d'un compteur s'incrémentant à chaque message de challenge ou la sortie d'une fonction pseudoaléatoire. Le contenu du champ 252 est donc un aléa qui est différent pour chaque message de challenge.

De l'étape 202 on passe à une étape 203 mise en oeuvre par la carte 101. Dans l'étape 203, la carte 101 reçoit le message 251 puis passe à une étape 204 de production d'un message 261 de réponse au message 251.

Dans une première variante le message 261 comporte un champ 262 identifiant la carte 101, un champ 263 décrivant les droits du porteur de la carte 101 relativement à la ressource commandée par l'unité 102 et un champ 264 de réponse au message de challenge. Dans cette variante la mémoire 110 comporte une clé 110a dite clé fille. Cette clé fille est une donnée secrète propre à la carte 101.

Dans la première variante le contenu du champ 264 est, par exemple, le résultat de :
- fonction (clé fille, champ 252),
- fonction (clé fille, identifiant 109a, champ 252) ou,
- fonction (clé fille, champ 252, droits) (ex C)
- etc. les possibilités ne manquant pas,
variante dans laquelle «fonction» est, par exemple, MD5, SHA1 ou une autre transformation utilisable dans le domaine des signatures électroniques.

Dans une deuxième variante «fonction» est une fonction de chiffrement symétrique de type RC4, AES ou autres.

Dans cette deuxième variante le contenu du champ 263 est alors chiffré par incorporation dans le champ 264 comme à la ligne (ex C), ou alors le contenu du champ 263 est simplement chiffré en fonction de la clé 110a fille.

Dans une troisième variante le message 261 comporte un champ 265 d'identification du porteur de la carte 101. Dans une mise en oeuvre préférée le champ 265 est chiffré de la même manière, ou avec le champ 263.

De l'étape 204, la carte 101 passe à une étape 205 dans laquelle elle émet le message 261 produit selon l'une des variantes de l'invention.

Dans une étape 206 l'unité 102 reçoit le message 261. L'unité 261 analyse alors le contenu de ce message.

Selon la première variante de l'invention cette analyse permet retrouver la clé fille associée à l'identifiant 262 dans la mémoire 115. Une fois cette clé fille retrouvée l'unité 102 peut recalculer le contenu théorique du champ 264. Dans la pratique, en même temps que la clé fille, l'unité 102 détermine la fonction qui a été utilisée pour la production du contenu du champ 264. Une fois ce calcul effectué, l'unité 102 compare le résultat théorique au contenu du champ 264. Si cette comparaison révèle des contenus différents alors on passe à une étape 207 de fin. Sinon l'analyse se poursuit par la lecture du contenu du champ 263 qui correspond aux droits associés à la carte 101. Ces droits sont alors analysés pour déterminer si la ressource P peut être débloquée. Si ces droits sont insuffisants pour autoriser le déblocage de la ressource P, alors on passe à l'étape 207 sinon on passe à une étape 208 de libération de la ressource qui correspond dans notre exemple à l'ouverture du portillon P.

L'étape 207 correspond, par exemple, à l'émission d'un signal sonore indiquant au porteur de la carte 101 que la ressource ne peut pas être débloquée.

Dans la deuxième variante de l'invention les étapes de l'analyse de l'étape 206 sont identiques à celles de la première variante si ce n'est que l'unité 102 procède en plus à un déchiffrement du contenu du message 261. Ce déchiffrement est réalisé grâce à la clé fille trouvée dans la mémoire 115.

Dans la pratique l'algorithme de chiffrement et l'algorithme correspondant à la « fonction » produisant le contenu du champ 264 sont prédéterminés et connus à la fois de l'unité 102 et de la carte 101.

Dans la troisième variante de l'invention les étapes d'une l'analyse 209 sont identiques à celles 206 de la deuxième variante si ce n'est qu'en cas de succès on passe à une étape 210 de demande de saisie d'un authentifiant du porteur de la carte 101.

Dans l'étape 210, c'est-à-dire à l'issue du déchiffrement du contenu du message 261, l'unité 102 a alors pris connaissance du contenu du champ 265, c'est-à-dire d'un authentifiant du porteur de la carte 101. Dans notre exemple il s'agit d'une donnée biométrique correspondant à une empreinte digitale portant sur un nombre limité de points de mesures caractéristiques, par exemple quatre points de mesures sur le pouce droit de l'utilisateur. Dans un autre exemple, il pourrait s'agir d'un code secret, d'une autre empreinte biométrique comme le contrôle de l'iris de l'oeil ou tout autre type d'authentifiant physique permettant de contrôler l'identité du porteur (par exemple la possession d'un composant électronique générant des mots de passe dynamiques).

Dans l'exemple choisi les circuits 117 correspondent donc à un lecteur d'empreinte digitale. Dans une autre variante il pourrait d'agir d'un clavier. Dans l'étape 210 le porteur de la carte 101 est donc invité par l'unité 102 à poser son pouce droit sur les circuits 117 de manière à permettre à l'unité 102 de lire l'empreinte digitale du porteur de la carte 101. Dans une autre variante le porteur pourrait être invité à saisir un code.

Une fois l'empreinte lue, ou le code saisi, l'unité compare le résultat de la lecture/saisie au contenu du champ 265 déchiffré. Si l'analyse révèle des contenus différents alors on passe à l'étape 207, sinon on passe à l'étape 208.

Dans l'invention la vérification de l'identité du porteur est donc déportée vers l'unité 102 à laquelle la carte 101 a fourni de manière sécurisée tour les éléments permettant de faire cette vérification.

Dans une variante de l'invention la clé fille est une fonction d'une clé mère via la fonction FM. La fonction FM produit une clé fille à partir d'une clé mère connue et d'un identifiant de carte RFID. Dans un mode de réalisation la clé fille est enregistrée dans la puce RFID en même temps que son code d'identification RFID. Cette enregistrement a lieu au moment d'une procédure d'enregistrement de l'abonné porteur de la carte RFID. Dans ce mode de réalisation la mémoire 115 associe un code RFID à une clé mère et l'unité 102 connaît la fonction FM. Dès que l'unité 102 connaît un identifiant RFID elle est alors capable de calculer la clé fille correspondant et donc de déchiffrer les messages émis par la puce RFID qui s'est identifiée via son identifiant RFID.

Dans un autre mode de réalisation la fonction FM est aussi mise en oeuvre par la carte 101 pour produire une clé fille.

Le recours à ces modes de mise en oeuvre permet de garantir à chaque carte RFID une clé fille de chiffrement différente tout en ne demandant pas de moyens de stockage importants au niveau de l'unité 102. Cela à pour effet de durcir sensiblement la résistance aux attaques tout en préservant un dimensionnement raisonnable de l'unité 102.

Dans une autre variante de l'invention le champ 263 comporte la description d'une transaction, par exemple une référence à un article, le prix correspondant à cet article et un identifiant du vendeur. Le procédé selon l'invention permet alors de valider simplement une vente en produisant une signature électronique avec identification du porteur de la carte. Dans cette variante les informations, référence article, prix et identification du vendeur sont transmis avec le message de challenge.

Dans une autre variante, la ressource concerne une information détenue par le RFID (par exemple une identité, un compte bancaire), cette information est diffusée suivant les méthodes décrites précédemment, mais il est possible d'interroger ou d'analyser la réponse de la puce RFID sans la possession de l'authentifiant de l'utilisateur, cette fonctionnalité étant mise à disposition, par exemple, des forces de police dans le cadre de la mise en oeuvre de la présente invention dans la protection des cartes d'identité. Cette interrogation peut être mise en oeuvre suivant différentes variantes.

Dans une première sous-variante, le composant RFID est bimode ou l'antenne est double-accord, c'est-à-dire que le composant peut répondre suivant deux plans de fréquence. Le premier plan de fréquence est utilisé pour les usages courant et le second par des entités autorisées de type gouvernemental. Suivant la fréquence de stimulation du composant RFID le mécanisme utilisé dans la présente demande utilisera l'authentifiant préenregistré de l'utilisateur ou celui des entités autorisées.

Dans une seconde sous-variante, les trames émises émettent les secrets nécessaires aux déchiffrements par les entités autorisées.

Dans une troisième sous-variante l'antenne émet un train de bits ou une commande spécifique reconnue par le composant et induisant l'usage de l'authentifiant des entités autorisées en lieu et place de l'authentifiant de l'utilisateur.

Ces 3 sous variantes reviennent en fait à avoir au moins 2 utilisateurs authentifiables par le dispositif de déblocage. Un premier utilisateur qui est le porteur de la carte, et un deuxième utilisateur qui est une autorité légale autorisée et qui possède son propre authentifiant pour accéder au dispositif de déblocage.

## Revendications

1. - Procédé de déblocage d'une ressource par un dispositif sans contact, la ressource et le dispositif communiquant par une voie aérienne, **caractérisé en ce qu'**il comporte les étapes suivantes:
- établissement d'une communication entre la ressource et le dispositif,
- émission d'un message de challenge par la ressource via la communication établie vers le dispositif sans contact,
- demande, par la ressource, de saisie de l'authentifiant par le porteur du dispositif sans contact,
- production par le dispositif sans contact d'un message de réponse au message de challenge,
- émission du message de réponse du dispositif sans contact vers la ressource,
- analyse par la ressource du message de réponse,
- confrontation, par la ressource, de l'authentifiant saisi à l'authentifiant utilisé par le message de réponse,
- libération de la ressource en cas de confrontation positive.

2. - Procédé selon la revendication 1 **caractérisé en ce que** le message de réponse comporte au moins un champ pour décrire des droits associés à l'utilisation de la ressource.

3. - Procédé selon l'une des revendications 1 ou 2, **caractérisé en ce qu'**au moins une partie du message de réponse est chiffrée.

4. - Procédé selon la revendication 3 **caractérisé en ce que** le chiffrement se fait par application d'un algorithme de chiffrement symétrique dont la clé de chiffrement est enregistrée dans le dispositif sans contact et ladite clé est une fonction d'un identifiant de clé lui aussi enregistré dans le dispositif sans contact ledit identifiant de clé étant alors transmis en clair dans le message de réponse.

5. - Procédé selon la revendication 4, **caractérisé en ce que** la fonction produisant la clé de chiffrement est mise en oeuvre par le dispositif sans contact.

6. - Procédé selon l'une des revendications 4 ou 5, **caractérisé en ce que** la fonction produisant la clé de chiffrement est mise en oeuvre dans une phase d'enregistrement dont le résultat seul est stocké par le dispositif sans contact.

7. - Procédé selon l'une des revendications 4 à 6, **caractérisé en ce que** la clé de chiffrement est fonction d'une clé mère.

8. - Procédé selon l'une des revendications 1 à 7, **caractérisé en ce que** le dispositif sans contact est une puce radiofréquence de type RFID.

9. - Procédé selon l'une des revendications 1 à 8, **caractérisé en ce que** le message de challenge comporte un aléa.

10. - Procédé selon l'une des revendications 1 à 9, **caractérisé en ce que** le message de challenge comporte la description d'une transaction.
